# EUROPEAN PATENT APPLICATION

(11) **EP 4 826 376 A1**
(43) Date of publication of application: **21.10.2026**
(21) Application number: 25770636.6
(22) Date of filing: 28.02.2025
(51) Int. Cl.: G01N 30/20, G01N 30/06, B01D 15/18, G01N 30/46, G01N 30/78, G01N 30/88, G01N 30/74

(54) **SINGLE-COLUMN AND DOUBLE-COLUMN ALTERNATING CYCLIC CHROMATOGRAPHY SYSTEM AND METHOD FOR SEPARATION AND PURIFICATION**

(30) Priority: 24.12.2024 CN 202411916896
(71) Applicant: Jiangsu Hanbon Science & Technology Co., Ltd., Huaian, Jiangsu 223005 (CN)
(72) Inventor: JIA, Kun, Huaian, Jiangsu 223005 (CN); XIANG, Lin, Huaian, Jiangsu 223005 (CN); YANG, Wei, Huaian, Jiangsu 223005 (CN); GUO, Furui, Huaian, Jiangsu 223005 (CN); CAI, Xinghui, Huaian, Jiangsu 223005 (CN); LI, Xianggang, Huaian, Jiangsu 223005 (CN); LU, Shushu, Huaian, Jiangsu 223005 (CN); ZHAO, Jianqiang, Huaian, Jiangsu 223005 (CN)
(74) Representative: Murgitroyd & Company
(86) International application number: PCT/CN2025/079764
(87) International publication number: WO 2026/137591

(57) **Abstract**

The present application relates to single- and dual-column alternating cycling chromatography system and method for separation and purification. The system includes: a first chromatography column, a second chromatography column, a first detector, a second detector, a first controlling valve, a second controlling valve, a first multi-port valve, a second multi-port valve, a third multi-port valve, a fourth multi-port valve, a fifth multi-port valve, and a sixth multi-port valve. The first controlling valve, the first multi-port valve, the first chromatography column, the first detector, and the third multi-port valve are sequentially connected. The second controlling valve, the second multi-port valve, the second chromatography column, the second detector, and the fourth multi-port valve are sequentially connected. The first multi-port valve is further connected to the second controlling valve. The second multi-port valve is further connected to the first controlling valve. The second multi-port valve is connected to the third multi-port valve, the fifth multi-port valve, and the sixth multi-port valve. The fifth multi-port valve and the sixth multi-port valve are further connected to the first multi-port valve. The fourth multi-port valve is further connected to the first multi-port valve, the fifth multi-port valve, and the sixth multi-port valve. The apparatus of the present application has a simple structure and high separation efficiency and yield.

## Description

### TECHNICAL FIELD

The present application relates to the field of chromatographic detection technology, particularly to single- and dual-column alternating cycling chromatography system and method for separation and purification.

### BACKGROUND

In the chromatographic detection field, conventional single-column chromatography processes are typically operated in a batch mode, requiring repeated steps such as feeding, elution, and collection, which are cumbersome and time-consuming, and consume large amounts of eluent, leading to relatively high production costs. Moreover, in conventional single-column chromatographic separation, the yield of a qualified sample after a single purification is low, and the mixed fraction of the sample and impurities often requires secondary concentration or dilution, followed by multiple purifications. The existing simulated moving bed (SMB) achieves countercurrent flow of the stationary and mobile phases through its specialized process, apparatus, and automatic control technology, enabling more thorough contact between the substances to be separated and the stationary phase in the system. This allows for effective separation of different components in the mixture, yielding higher-purity samples with less eluent consumption while enabling automated continuous operation of the system and reducing labor costs. However, the conventional simulated moving bed typically requires multiple chromatographic columns, along with more complex pipeline and valve systems to achieve the function of the simulated moving bed, resulting in a complex apparatus structure, a large footprint, and high investment and maintenance costs, as well as a challenge in cleaning.

### SUMMARY

In view of this, there is a need to provide a single- and dual-column alternating cycling chromatography system for separation and purification. The single- and dual-column alternating cycling chromatography system for separation and purification according to the present application has a compact and simple structure, requires fewer chromatography columns, and is easy to operate. In addition, the chromatography system can achieve high purity and high yield of separated products, while enabling automated and continuous separation and purification.

The present application provides a single- and dual-column alternating cycling chromatography system for separation and purification.

The single- and dual-column alternating cycling chromatography system for separation and purification includes: a first chromatography column, a second chromatography column, a first detector, a second detector, a first controlling valve, a second controlling valve, a first multi-port valve, a second multi-port valve, a third multi-port valve, a fourth multi-port valve, a fifth multi-port valve, and a sixth multi-port valve. The first controlling valve, the first multi-port valve, the first chromatography column, the first detector, and the third multi-port valve are sequentially connected. The second controlling valve, the second multi-port valve, the second chromatography column, the second detector, and the fourth multi-port valve are sequentially connected. The first multi-port valve is further connected to the second controlling valve. The second multi-port valve is further connected to the first controlling valve. The second multi-port valve is connected to the third multi-port valve, the fifth multi-port valve, and the sixth multi-port valve, parallelly. The fifth multi-port valve and the sixth multi-port valve are further parallelly connected to the first multi-port valve. The fourth multi-port valve is further connected to the first multi-port valve, the fifth multi-port valve, and the sixth multi-port valve, parallelly.

In some embodiments, the first controlling valve, the second controlling valve, the first multi-port valve, the second multi-port valve, the third multi-port valve, the fourth multi-port valve, the fifth multi-port valve, and the sixth multi-port valve are each independently selected from a four-port valve.

In some embodiments, the single- and dual-column alternating cycling chromatography system for separation and purification further includes a first driving pump, wherein a port of the first multi-port valve and a port of the second multi-port valve are connected in parallel and then connected to the first controlling valve via the first driving pump.

In some embodiments, the single- and dual-column alternating cycling chromatography system for separation and purification further includes a second driving pump, wherein a port of the first multi-port valve and a port of the second multi-port valve are connected in parallel and then connected to the second controlling valve via the second driving pump.

In some embodiments, the single- and dual-column alternating cycling chromatography system for separation and purification further includes a third driving pump, wherein a port of the fourth multi-port valve, a port of the fifth multi-port valve, and a port of the sixth multi-port valve are connected in parallel and then connected to the first multi-port valve via the third driving pump.

In some embodiments, the single- and dual-column alternating cycling chromatography system for separation and purification further includes a fourth driving pump connected to a port of the fifth multi-port valve and configured to pump in a diluent.

In some embodiments, the single- and dual-column alternating cycling chromatography system for separation and purification further includes a fifth driving pump connected to a port of the sixth multi-port valve and configured to pump out an overflown solvent.

In some embodiments, the first detector includes one or more detectors of an ultraviolet detector, an evaporative light scattering detector, and a refractive index detector.

In some embodiments, the second detector includes one or more detectors of an ultraviolet detector, an evaporative light scattering detector, and a refractive index detector.

In some embodiments, the first multi-port valve at least includes: a first port connected to the first controlling valve, a second port connected to the second controlling valve, a third port connected to the first chromatography column, and a fourth port connected to the third driving pump.

The second multi-port valve at least includes: a first port connected to the first controlling valve, a second port connected to the second controlling valve, a third port connected to the second chromatography column, and a fourth port connected to the fifth multi-port valve and the sixth multi-port valve, parallelly.

The third multi-port valve at least includes: a first port connected to the first detector and configured to discharge a former impurity, a second port connected to the second multi-port valve and the fifth multi-port valve, parallelly, a third port configured to discharge a latter impurity, and a fourth port configured to discharge a separated sample.

The fourth multi-port valve at least includes: a first port connected to the second detector and configured to discharge a latter impurity, a second port configured to discharge a latter impurity, a third port configured to discharge a separated sample, and a second port connected to the third driving pump, the fifth multi-port valve, and the sixth multi-port valve, parallelly.

The fifth multi-port valve at least includes: a first port, a second port connected to the second multi-port valve, a third port configured to pump in a diluent, and a fourth port connected to the first multi-port valve and the fourth multi-port valve, parallelly.

The sixth multi-port valve at least includes: a first port, a second port connected to the second multi-port valve, a third port configured to discharge an overflown solvent, and a fourth port connected to the first multi-port valve and the fourth multi-port valve, parallelly.

An embodiment of the present application further provides a single- and dual-column alternating cycling chromatography method for separation and purification.

The single- and dual-column alternating cycling chromatography method for separation and purification uses the single- and dual-column alternating cycling chromatography system for separation and purification as described above, and the method includes the following steps:
performing a first cycling: saturation loading a multi-component mixture (G) onto the first chromatography column; eluting the first chromatography column to separate the multi-component mixture (G) through the first chromatography column into a former impurity (a), a former impurity and sample mixed fraction (b), a small amount of qualified sample fraction (c), a latter impurity and sample mixed fraction (d), and a latter impurity (e) in sequence; under eluting the first chromatography column with a mobile phase, discharging the former impurity (a) via the third multi-port valve first, transferring the former impurity and sample mixed fraction (b), the small amount of qualified sample fraction (c), and the latter impurity and sample mixed fraction (d) into the second chromatography column, wherein the former impurity and sample mixed fraction (b), the small amount of qualified sample fraction (c), and the latter impurity and sample mixed fraction (d) collectively form an internal circulating sample (f); during transferring the internal circulating sample (f), controlling the system to be in a closed-loop state without introducing an additional eluent, and pumping a diluent into the system for online dilution according to an application scenario of the sample; switching the first controlling valve to a regenerant to discharge the latter impurity (e) from the first chromatography column; and switching the first controlling valve to an eluent to equilibrate the first chromatography column, thereby completing the first cycling;
performing a second cycling: transferring the internal circulating sample (f) from the second chromatography column to the first chromatography column via a port of the first chromatography column configured to receive the internal circulating sample (f); and during transferring the internal circulating sample (f), controlling the system to be in a closed-loop state without introducing an additional eluent, and pumping a diluent into the system for online dilution according to an application scenario of the sample; switching the first controlling valve to a regenerant and activating the first driving pump to discharge the latter impurity (e) from the second chromatography column; and switching the first controlling valve to an eluent and activating the first driving pump to equilibrate the second chromatography column, thereby completing the second cycling; and
repeating the first cycling and the second cycling until the internal circulating sample (f) meets a quality requirement.

In some embodiments, the former impurity (a) or the latter impurity (e) discharged from the first chromatography column or the second chromatography column is collected and stored, separately.

In some embodiments, the mobile phase for the first driving pump includes, but is not limited to, the eluent, the regenerant, or an equilibration buffer.

In some embodiments, after repeating the first cycling and the second cycling at least once, the regenerant and/or the equilibration buffer are pumped in through the first driving pump to regenerate and/or equilibrate the first chromatography column and/or the second chromatography column.

The single- and dual-column alternating cycling chromatography system for separation and purification has a compact and simple structure, requires fewer chromatography columns, and is easy to operate. In addition, the chromatography system can achieve high purity and high yield of separated products, while enabling automated and continuous separation and purification.

The present application reduces the number of chromatography columns while employing the countercurrent operation of the simulated moving bed (SMB), realizing automated continuous cycling operation of the due-column chromatography. The main advantages lie in using two chromatography columns to realize the countercurrent and continuous operation functions of the simulated moving bed, enabling true continuous separation and purification of multi-component mixtures at relatively low investment costs. The system has a simplified structure with flexible operation, and a relatively high separation efficiency and yield, and can achieve automated continuous operation, saving time and labor costs, and reducing the capital investment. Moreover, the system maintenance and cleaning can be conducted easily, and the eluent consumption can be reduced significantly.

### BRIEF DESCRIPTION OF THE DRAWINGS

In order to illustrate the embodiments of the present application more clearly, the drawings used in the description of the embodiments will be described briefly. Apparently, the following described drawings are merely for some embodiments of the present application, and other drawings can be derived based on the following drawings by those of ordinary skill in the art without any creative effort.

To provide a more comprehensive understanding of the present application and beneficial effects thereof, the following description will be made with reference to the accompanying drawings. In the following description, the same reference signs designate the same components.
FIG. 1 shows a schematic control diagram of a single- and dual-column alternating cycling chromatography system for separation and purification according to an embodiment of the present application.
FIG. 2 shows a preparative liquid chromatography spectrum of an oil according to an embodiment of the present application.
FIG. 3 shows a detection spectrum of the oil after separation and purification by using the single- and dual-column alternating cycling chromatography system for separation and purification according to an embodiment of the present application.

### Reference signs:

10: single- and dual-column alternating cycling chromatography system for separation and purification, 110: first chromatography column, 120: second chromatography column, 210: first detector, 220: second detector, 310: first controlling valve, 320: second controlling valve, 330: first multi-port valve, 340: second multi-port valve, 350: third multi-port valve, 360: fourth multi-port valve, 370: fifth multi-port valve, 380: sixth multi-port valve, 410: first driving pump, 420: second driving pump, 430: third driving pump, 440: fourth driving pump, 450: fifth driving pump.

### DETAILED DESCRIPTION

The embodiments of the present application will be described in detail with reference to the accompanying drawings in order to make the objectives, features, and advantages of the present application more apparent and understandable. Many specific details are disclosed in the following description to facilitate a comprehensive understanding of the present application. However, it should be noted that the present application can be implemented in various ways different from those described herein, and those skilled in the art may make similar improvements without departing from the scope of the present application. Therefore, the present application is not limited to the specific embodiments disclosed below.

In the description of the present application, the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings, and are used for facilitating the description of the present application and simplifying the description only, rather than indicating or implying that the apparatus or element referred to must have a particular orientation or be constructed and operated in a particular orientation, and therefore are not to be interpreted as limiting the present application.

In the present application, unless otherwise specified and defined explicitly, the terms "install", "connect", "join", "fix", and the like should be interpreted in a broad sense. For example, unless otherwise defined explicitly, they may refer to a fixed connection, a detachable connection, or an integral connection, may refer to a mechanical connection or an electrical connection, and may refer to a direct connection, an indirect connection via an intermediate medium, an internal communication between two elements, or interaction between two elements. The specific meanings of these terms in the present application can be understood based on specific circumstances by those of ordinary skills in the art.

In the present application, unless otherwise specified and defined explicitly, a first feature, when expressed as being "on" or "under" a second feature, may be in direct contact with the second feature or in indirect contact with the second feature via an intermediate medium. Furthermore, a first feature, when expressed as being "over", "above" or "on top of" a second feature, may be located right above or obliquely above the second feature, or only located at a level higher than that of the second feature. A first feature, when expressed as being "below", "underneath" or "under" a second feature, may be located right below or obliquely below the second feature, or only located at a level lower than that of the second feature.

In the description of the present application, the term "several" means more than one, and the term "multiple" means two or more. The terms such as "greater than", "less than", "exceeding", and the like are understood to exclude the referenced number, while the terms such as "above", "below", "within", and the like are understood to include the referenced number. The use of "first" and "second" is solely for the purpose of distinguishing technical features and should not be construed as indicating or implying relative importance, implicitly specifying the quantity of the indicated technical features, or implicitly specifying the sequential relationship of the indicated technical features.

In the present application, "optionally", "optional", and "option" mean non-mandatory, indicating two parallel solutions with or without the optional feature. If the term "optional" or the like appears multiple times in a same technical solution, unless otherwise specified or there is a contradiction or mutual restriction, each "optional" is independent from the others. In the present application, the expression such as "optionally contain" and "optionally include" mean "include or not include".

In the present application, unless stated otherwise, the sum of the parts of each component in the composition is 100 parts by weight. Unless otherwise specified, the percentages (including weight percentages) in the present application are based on the total weight of the composition. Additionally, "wt%" herein represents mass percentage.

In the present application, unless otherwise specified, various reaction steps may or may not be carried out in the order described herein. For example, other steps may be included between the reaction steps, and the order of the reaction steps may also be adjusted appropriately. This can be determined by those skilled in the art based on common knowledge and experience. Preferably, the reaction steps descripted herein are carried out sequentially.

In the present application, when a numerical interval (i.e., a numerical range) is mentioned, unless otherwise specified, suitable values are considered as being continuously distributed within the numerical interval, and include two numerical endpoints (i.e., the minimum and maximum values) as well as every value between the two numerical endpoints. Unless otherwise specified, when a numerical interval is referred to as encompassing only integers within the numerical interval, the two end integers of the numerical interval and every integer between the two end integers are included, being equivalent to directly enumerating each integer. When multiple numerical ranges are provided to describe a feature or characteristic, these numerical ranges can be combined. In other words, unless otherwise indicated, the numerical ranges disclosed in the present application should be understood to encompass any and all subranges included therein. The "values" in the numerical interval can be any quantitative values, such as numbers, percentages, and ratios. The term "numerical interval" can broadly encompass quantitative intervals, such as a percentage interval, a proportion interval, and a ratio interval.

Unless defined otherwise, all technical and scientific terms used herein have the same meaning as commonly understood by those skilled in the art of the present application. The terms used in the specification of the present application are for the purpose of describing exemplary examples only and are not intended to limit the present application. The term "and/or" as used herein includes any and all combinations of one or more related listed items.

The embodiments of the present application provide a single- and dual-column alternating cycling chromatography system for separation and purification to address at least one of the following issues: (1) In conventional single-column chromatographic separation, the yield of qualified samples after a single purification is low, and the mixed fraction of the sample and impurities often requires secondary concentration or dilution, followed by multiple purifications, leading to a complex operation. (2) The conventional simulated moving bed (SMB) typically requires multiple chromatographic columns, along with more complex pipeline and valve systems to achieve the function of the simulated moving bed, resulting in a complex apparatus structure, a large footprint, and high investment and maintenance costs, as well as a challenge in cleaning. The single- and dual-column alternating cycling chromatography system for separation and purification will be described below with reference to the accompanying drawings.

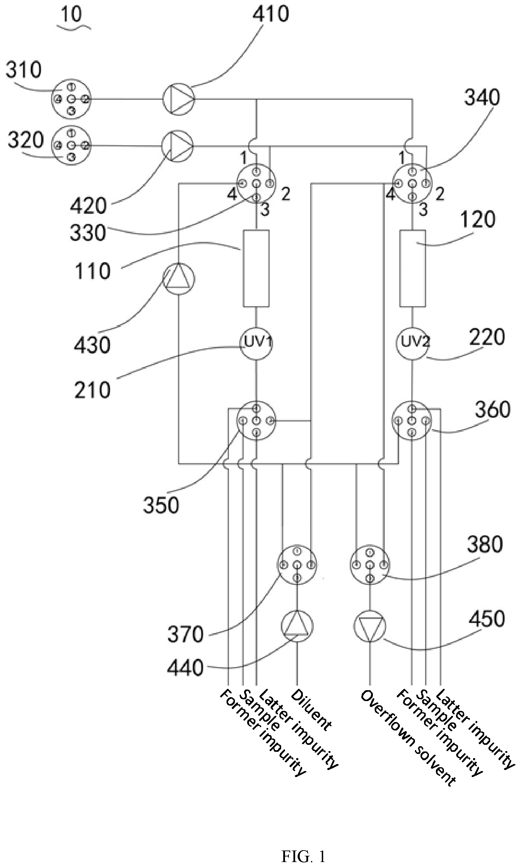

The single- and dual-column alternating cycling chromatography system 10 for separation and purification provided in an embodiment of the present application is exemplarily illustrated in FIG. 1. FIG. 1 shows a schematic structural view of the single- and dual-column alternating cycling chromatography system 10 for separation and purification provided in the embodiment of the present application. The single- and dual-column alternating cycling chromatography system 10 for separation and purification of the present application can be used for intended purposes.

In order to more clearly illustrate the structure of the single- and dual-column alternating cycling chromatography system 10 for separation and purification, the single- and dual-column alternating cycling chromatography system 10 for separation and purification will be described below in conjunction with the accompanying drawings.

Exemplarily, referring to FIG. 1, a single- and dual-column alternating cycling chromatography system 10 for separation and purification includes: a first chromatography column 110, a second chromatography column 120, a first detector 210, a second detector 220, a first controlling valve 310, a second controlling valve 320, a first multi-port valve 330, a second multi-port valve 340, a third multi-port valve 350, a fourth multi-port valve 360, a fifth multi-port valve 370, and a sixth multi-port valve 380. The first controlling valve 310, the first multi-port valve 330, the first chromatography column 110, the first detector 210, and the third multi-port valve 350 are sequentially connected. The second controlling valve 320, the second multi-port valve 340, the second chromatography column 120, the second detector 220, and the fourth multi-port valve 360 are sequentially connected. The first multi-port valve 330 is further connected to the second controlling valve 320. The second multi-port valve 340 is further connected to the first controlling valve 310. The second multi-port valve 340 is parallelly connected to the third multi-port valve 350, the fifth multi-port valve 370, and the sixth multi-port valve 380. The fifth multi-port valve 370 and the sixth multi-port valve 380 are further parallelly connected to the first multi-port valve 330. The fourth multi-port valve 360 is further parallelly connected to the first multi-port valve 330, the fifth multi-port valve 370, and the sixth multi-port valve 380.

The single- and dual-column alternating cycling chromatography system for separation and purification as described above has a compact and simple structure, requires fewer chromatography columns, and is easy to operate. In addition, the chromatography system can achieve high purity and high yield of separated products, while enabling automated and continuous separation and purification. In the single- and dual-column alternating cycling chromatography system for separation and purification, the first chromatography column 110 and the second chromatography column 120 can be independently operated.

In some embodiments, the first controlling valve 310, the second controlling valve 320, the first multi-port valve 330, the second multi-port valve 340, the third multi-port valve 350, the fourth multi-port valve 360, the fifth multi-port valve 370, and the sixth multi-port valve 380 are each independently selected from a four-port valve.

In some embodiments, the first controlling valve 310 and the second controlling valve 320 can each be a solvent pump.

In some embodiments, the single- and dual-column alternating cycling chromatography system 10 for separation and purification further includes a first driving pump 410. A port of the first multi-port valve 330 and a port of the second multi-port valve 340 are connected in parallel and then connected to the first controlling valve 310 via the first driving pump 410.

In some embodiments, the single- and dual-column alternating cycling chromatography system 10 for separation and purification further includes a second driving pump 420. A port of the first multi-port valve 330 and a port of the second multi-port valve 340 are connected in parallel and then connected to the second controlling valve 320 via the second driving pump 420.

In some embodiments, the single- and dual-column alternating cycling chromatography system 10 for separation and purification further includes a third driving pump 430. A port of the fourth multi-port valve 360, a port of the fifth multi-port valve 370, and a port of the sixth multi-port valve 380 are connected in parallel and then connected to the first multi-port valve 330 via the third driving pump 430.

In some embodiments, the single- and dual-column alternating cycling chromatography system 10 for separation and purification further includes a fourth driving pump 440. The fourth driving pump 440 is connected to a port of the fifth multi-port valve 370 and configured to pump in a diluent.

In some embodiments, the single- and dual-column alternating cycling chromatography system 10 for separation and purification further includes a fifth driving pump 450. The fifth driving pump 450 is connected to a port of the sixth multi-port valve 380 and configured to pump out an overflown solvent.

In some embodiments, the first detector 210 includes one or more detectors selected from an ultraviolet detector, an evaporative light scattering detector, and a refractive index detector.

In some embodiments, the second detector 220 includes one or more detectors selected from an ultraviolet detector, an evaporative light scattering detector, and a refractive index detector.

In some embodiments, referring to FIG. 1, the first multi-port valve 330 at least includes a first port connected to the first controlling valve 310, a second port connected to the second controlling valve 320, a third port connected to the first chromatography column 110, and a fourth port connected to the third driving pump 430. As shown in FIG. 1, the numbers 1, 2, 3, and 4 are respectively marked clockwise on the first multi-port valve 330, which represent the first port, the second port, the third port, and the fourth port of the first multi-port valve 330, respectively.

As shown in FIG. 1, the second multi-port valve 340 at least includes a first port connected to the first controlling valve 310, a second port connected to the second controlling valve 320, a third port connected to the second chromatography column 120, and a fourth port parallelly connected to the fifth multi-port valve 370 and the sixth multi-port valve 380. As shown in FIG. 1, the numbers 1, 2, 3, and 4 are respectively marked clockwise on the second multi-port valve 340, which represent the first port, the second port, the third port, and the fourth port of the first multi-port valve 330, respectively. The first port, second port, third port, and fourth port of other multi-port valves are also distributed according to the above rule, and the corresponding numbers are not shown in FIG. 1.

As shown in FIG. 1, the third multi-port valve 350 at least includes a first port connected to the first detector 210 and configured to discharge a former impurity, a second port parallelly connected to the second multi-port valve 340 and the fifth multi-port valve 370, a third port configured to discharge a latter impurity, and a fourth port configured to discharge a separated sample.

As shown in FIG. 1, the fourth multi-port valve 360 at least includes a first port connected to the second detector 220 and configured to discharge a latter impurity, a second port configured to discharge a latter impurity, a third port configured to discharge a separated product, and a second port parallelly connected to the third driving pump 430, the fifth multi-port valve 370, and the sixth multi-port valve 380.

As shown in FIG. 1, the fifth multi-port valve 370 at least includes a first port, a second port connected to the second multi-port valve 340, a third port configured to pump in a diluent, and a fourth port parallelly connected to the first multi-port valve 330 and the fourth multi-port valve 360.

As shown in FIG. 1, the sixth multi-port valve 380 at least includes a first port, a second port connected to the second multi-port valve 340, a third port configured to discharge an overflown solvent, and a fourth port parallelly connected to the first multi-port valve 330 and the fourth multi-port valve 360.

In the single- and dual-column alternating cycling chromatography system 10 for separation and purification, the first chromatography column and the second chromatography column can operate independently. For example, the first chromatography column 110 can be operated independently when the first controlling valve 310, the first driving pump 410, the first multi-port valve 330, the first chromatography column 110, the third multi-port valve 350, and the fifth multi-port valve 370 are sequentially communicated. Alternatively, the second chromatography column 120 can be operated independently when the second controlling valve 320, the second driving pump 420, the second multi-port valve 340, the second chromatography column 120, the fourth multi-port valve 360, and the sixth multi-port valve 380 are sequentially communicated.

An embodiment of the present application further provides a single- and dual-column alternating cycling chromatography method for separation and purification.

The single- and dual-column alternating cycling chromatography method for separation and purification adopts the single- and dual-column alternating cycling chromatography system 10 for separation and purification as described above, and includes the following steps:

A first cycling is performed as follows: Under the control of the first driving pump 410, a multi-component mixture (G) is driven and saturation loaded onto the first chromatography column 110. Under the control of the second driving pump 420, the first chromatography column 110 is eluted to separate the multi-component mixture (G) through the first chromatography column 110 into a former impurity (a), a former impurity and sample mixed fraction (b), a small amount of qualified sample fraction (c), a latter impurity and sample mixed fraction (d), and a latter impurity (e) in sequence. Under the elution of the first chromatography column 110 with a mobile phase, the former impurity (a) is firstly discharged via the third multi-port valve 350, the former impurity and sample mixed fraction (b) is transferred into the second chromatography column 120 via the third driving pump 430, the small amount of qualified sample fraction (c) is transferred into the second chromatography column 120 via the third driving pump 430, and the latter impurity and sample mixed fraction (d) is transferred into the second chromatography column 120 via the third driving pump 430. In this stage, the former impurity and sample mixed fraction, the small amount of qualified sample fraction (c), and the latter impurity and sample mixed fraction (d) collectively form an internal circulating sample (f). During the transfer of the internal circulating sample (f), the entire system is in a closed-loop state without introducing an additional eluent, and in this stage, the fourth driving pump 440 is activated to pump in a diluent for online dilution according to an application scenario of the sample, while the fifth driving pump 450 is activated for the transfer under the same conditions. When the transfer is completed, the first controlling valve 310 is switched to a regenerant, and under the control of the first driving pump 410, the latter impurity (e) is discharged from the first chromatography column 110. Finally, the first controlling valve 310 is switched to an eluent, and under the control of the first driving pump 410, the first chromatography column 110 is equilibrated, thereby completing the first cycling.

A second cycling is performed as follows: The internal circulating sample (f) is transferred from the second chromatography column 120 to the first chromatography column 110 via a port of the first chromatography column 110 configured to receive the internal circulating sample (f). During the transfer of the internal circulating sample (f), the entire system is in a closed-loop state without introducing an additional eluent, and in this stage, the fourth driving pump 440 is activated to pump in a diluent for online dilution according to an application scenario of the sample, while the fifth driving pump 450 is activated for the transfer at the same flow rate. When the transfer is completed, the first controlling valve 310 is switched to the regenerant, and the latter impurity (e) is discharged from the second chromatography column 120 by activating the first driving pump 410. Finally, the first controlling valve 310 is switched to the eluent, and the second chromatography column 120 is equilibrated by activating the first driving pump 410, thereby completing the second cycling.

Additionally, the first cycling and the second cycling are repeated until the internal circulating sample (f) meets a quality requirement.

In some embodiments, the former impurity (a) or the latter impurity (e) discharged from the first chromatography column or the second chromatography column is collected and stored, separately.

In some embodiments, the mobile phase introduced by the first driving pump 410 includes, but is not limited to, the eluent, the regenerant, or an equilibration buffer.

In some embodiments, after repeating the first cycling and the second cycling at least once, the regenerant or the equilibration buffer is pumped in via the first driving pump 410 to regenerate and/or equilibrate the first chromatography column 110 and/or the second chromatography column 120.

The parameters for discharging the former impurity include the following: The first chromatography column 110 and the second chromatography column 120 are independent from each other. In the present application, the flow rate of the solvent pump is the same as the flow rate of the separating reagent. In the present application, the elution time of the former impurity can be adjusted according to practical application scenarios. In the present application, if the former impurity has value in practical application scenarios, it can be collected and stored separately; if the former impurity has no value, it can be directly discharged into waste liquid for treatment.

The parameters for transferring the former impurity and sample mixed fraction (b) include the following: The first chromatography column 110 and the second chromatography column 120 are connected in series to each other to form a closed-loop. The transfer time of the former impurity and sample mixed fraction (b) can be adjusted according to practical application scenarios.

The parameters for transferring the small amount of qualified sample include the following: The first chromatography column 110 and the second chromatography column 120 are connected in series to each other to form a closed-loop. In the present application, the flow rate of the first driving pump 410 or the flow rate of the driving pump is the same as the flow rate of the separating reagent. In the present application, the collection time of the qualified sample can be adjusted according to practical application scenarios.

The parameters for transferring the latter impurity and sample mixed fraction (d) include the following: The first chromatography column 110 and the second chromatography column 120 are connected in series to each other to form a closed-loop. The transfer time of the latter impurity and sample mixed fraction (d) can be adjusted according to practical application scenarios.

In the present application, the parameters for regeneration (i.e., discharging the latter impurity) include the following: The first chromatography column 110 and the second chromatography column 120 are independent from each other. In the present application, the regenerant is introduced into the chromatography column via the first driving pump 410 or by driving the driving pump. In the present application, the flow rate of the first driving pump 410 or the second driving pump 420 is the same as the flow rate of the separating reagent. In the present application, the elution strength of the regenerant is greater than that of the eluent. In the present application, the regeneration time can be adjusted according to practical application scenarios.

In the present application, the parameters for equilibration include the following: The first chromatography column 110 and the second chromatography column 120 are independent from each other. In the present application, the equilibration buffer is introduced into the chromatography columns via the first driving pump 410 or the second driving pump 420. In the present application, the flow rate of the first driving pump 410 or the second driving pump 420 is the same as the flow rate of the separating reagent. In the present application, the elution strength of the solution from the first driving pump 410 or the second driving pump 420 is the same as that of the separating reagent. The equilibration time can be adjusted according to practical application scenarios.

In the present application, the parameters for transferring the internal circulating sample include the following: The first chromatography column 110 and the second chromatography column 120 are connected in series to each other to form a closed-loop. In the present application, the outlet of the second chromatography column 120 is connected to the inlet of the first chromatography column 110, and the outlet of the first chromatography column 110 is connected to the inlet of the second chromatography column 120. In the present application, the circulation pump drives the mobile phase to flow in the closed-loop. In the present application, during the transfer of the internal circulating sample, the fourth driving pump 440 is activated for online dilution according to an application scenario of the sample, while the fifth driving pump 450 is activated simultaneously for online overflow. In the present application, the flow rates of the circulation pump, the fourth driving pump 440, and the fifth driving pump 450 can be adjusted according to practical application scenarios. In the present application, the conditions of the fourth driving pump 440 and the fifth driving pump 450 should be the same.

In the present application, to achieve an efficient and continuous separation and purification for a multi-component mixture, the number of repetitions of the first cycling and the second cycling can be greater than or equal to 2 times. The first cycling and the second cycling are collectively referred to as a complete cycle, and the subsequent steps involve repeating the complete cycle multiple times until the internal circulating sample meets the quality requirement. The subsequent sample processing steps are the same as those described in the first cycling and the second cycling.

### Example 1

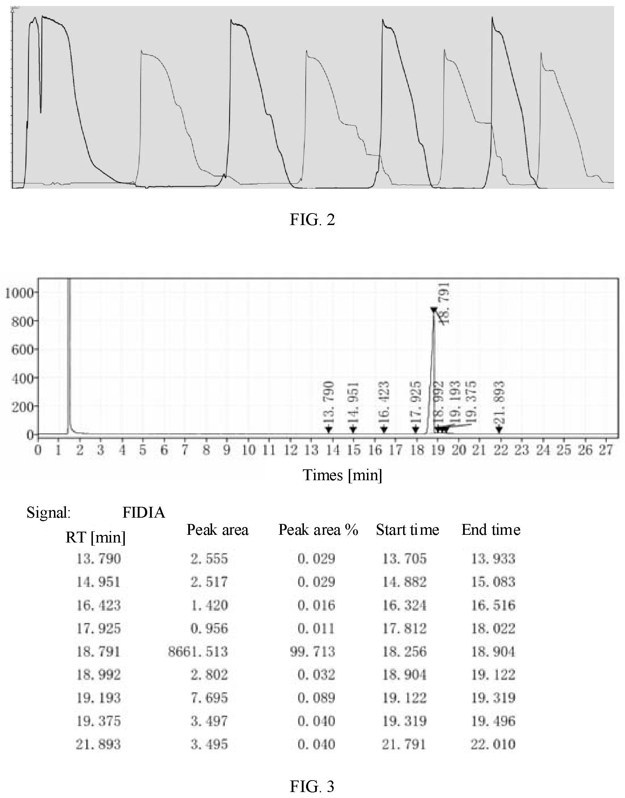

In this example, oil extracted from an animal was used as a raw material with a purity of 80%. The oil was dissolved in a methanol-water solution to prepare a sample solution at a concentration of 100 mg/mL. FIG. 2 shows a preparative liquid chromatography spectrum of the oil, where the horizontal axis represents time in unit of "min" and the vertical axis represents absorbance in unit of "mAu".

The sample solution was separated and purified using the single- and dual-column alternating cycling chromatography system 10 for separation and purification as described above.

In the single- and dual-column alternating cycling chromatography system 10 for separation and purification, both the first chromatography column 110 and the first chromatography column 110 had a diameter of 10 mm and a length of 250 mm. The packing material in both the first chromatography column 110 and the first chromatography column 110 was a C18 packing material with a particle size of 30 µm (the C18 packing material was supplied by Jiangsu Hanbon Science & Technology Co., Ltd.).

The single- and dual-column alternating cycling chromatography method for separation and purification includes the following steps:
A first cycling was performed as follows: Under the control of the first driving pump 410, a multi-component mixture (G) was driven and saturation loaded onto the first chromatography column 110. Under the control of the second driving pump 420, the first chromatography column 110 was eluted to separate the multi-component mixture (G) through the first chromatography column 110 into a former impurity (a), an former impurity and sample mixed fraction (b), a small amount of qualified sample fraction (c), a latter impurity and sample mixed fraction (d), and a latter impurity (e) in sequence. Under the elution of the first chromatography column 110 with a mobile phase, the former impurity (a) was firstly discharged via the third multi-port valve 350, the former impurity and sample mixed fraction (b) was transferred into the second chromatography column 120 via the third driving pump 430, the small amount of qualified sample fraction (c) was transferred into the second chromatography column 120 via the third driving pump 430, and the latter impurity and sample mixed fraction (d) was transferred into the second chromatography column 120 via the third driving pump 430. In this stage, the former impurity and sample mixed fraction, the small amount of qualified sample fraction (c), and the latter impurity and sample mixed fraction (d) collectively formed an internal circulating sample (f). During the transfer of the internal circulating sample (f), the entire system was in a closed-loop state without introducing an additional eluent, and in this stage, the fourth driving pump 440 was activated to pump in a diluent for online dilution according to an application scenario of the sample, while the fifth driving pump 450 was activated for the transfer under the same conditions. When the transfer was completed, the first controlling valve 310 was switched to a regenerant, and under the control of the first driving pump 410, the latter impurity (e) was discharged from the first chromatography column 110. Finally, the first controlling valve 310 was switched to an eluent, and under the control of the first driving pump 410, the first chromatography column 110 was equilibrated, thereby completing the first cycling.

A second cycling was performed as follows: The internal circulating sample (f) was transferred from the second chromatography column 120 to the first chromatography column 110 via a port of the first chromatography column 110 configured to receive the internal circulating sample (f). During the transfer of the internal circulating sample (f), the entire system was in a closed-loop state without introducing an additional eluent, and in this stage, the fourth driving pump 440 was activated to pump in a diluent for online dilution according to an application scenario of the sample, while the fifth driving pump 450 was activated for the transfer at the same flow rate. When the transfer was completed, the first controlling valve 310 was switched to the regenerant, and the latter impurity (e) was discharged from the second chromatography column 120 by activating the first driving pump 410. Finally, the first controlling valve 310 was switched to the eluent, and the second chromatography column 120 was equilibrated by activating the first driving pump 410, thereby completing the second cycling.

Additionally, the first cycling and the second cycling were repeated until the internal circulating sample (f) met a quality requirement.

In the method of this example, the parameters for loading included the following: The first chromatography column 110 and the second chromatography column 120 were independent from each other, the loading pump had a flow rate of 3 mL/min, and a time period for loading was 1 minute.

The parameters for separation included the following: The first chromatography column 110 and the second chromatography column 120 were independent from each other, the separating reagent was ethanol with a volume percentage of 96%, the solvent pump for the separating reagent had a flow rate of 5 mL/min, and a time period for separation was 5 minutes.

The parameters for transferring each of the former impurity and sample mixed fraction, the small amount of qualified sample, and the latter impurity and sample mixed fraction included the following: The first chromatography column 110 and the second chromatography column 120 were connected in series to each other to form a closed-loop, and the solvent from the second chromatography column 120 was used as the eluent, the circulating pump had a flow rate of 5 mL/min. During transfer of the internal circulating sample from the first chromatography column 110 to the second chromatography column 120, the parameters for the fourth driving pump 440 and the fifth driving pump 450 included the following: Both the fourth driving pump 440 and the fifth driving pump 450 had a flow rate of 0.2 mL/min, and the diluent was purified water.

The parameters for regeneration and equilibration included the following: The first chromatography column 110 and the second chromatography column 120 were independent from each other, the separating reagent was the same as the equilibration buffer, the regenerant was pure ethanol, the first driving pump 410 for the eluent had a flow rate of 5 mL/min, the time period for each of the regeneration and the equilibration was 3 minutes, completing the first cycling.

At the beginning of the second cycling, the internal circulating sample was transferred from the second chromatography column 120 to the first chromatography column 110 via a port of the first chromatography column 110 for receiving the internal circulating sample. During the transfer of the internal circulating sample, the entire system was in a closed-loop state without introducing an additional eluent, and in this stage according to an application scenario of the sample, the fourth driving pump 440 was activated to pump in a diluent for online dilution while the fifth driving pump 450 was activated for the transfer at the same flow rate. When the transfer was completed, the solvent selecting valve V01 was switched to the regenerant, and pump P01 was activated to discharge the latter impurity from the second chromatography column 120. Finally, the solvent selecting valve V01 was switched to the eluent, and pump P01 was activated to equilibrate the second chromatography column 120, completing the second cycling.

The first cycling and the second cycling were referred to as a complete cycle, and the subsequent steps involved repeating the complete cycle multiple times until the internal circulating sample met the quality requirement. The subsequent steps were the same as those described in the first cycling and the second cycling.

The parameters for transferring the internal circulating sample included the following: the first chromatography column 110 and second chromatography column 120 were connected in series to each other to form a closed-loop, the solvent from the first chromatography column 110 was used as the eluent, the circulating pump had a flow rate of 5 mL/min. During the transfer of the internal circulating sample from the second chromatography column 120 to the first chromatography column 110, the parameters for the fourth driving pump 440 and the fifth driving pump 450 included the following: Both the fourth driving pump 440 and the fifth driving pump 450 had a flow rate of 0.2 mL/min, and the diluent was purified water.

The parameters for regeneration and equilibration included the following: The first chromatography column 110 and the second chromatography column 120 were independent from each other, the separating reagent was the same as the equilibration buffer, the regenerant was pure ethanol, the first driving pump 410 for the eluent had a flow rate of 5 mL/min, the time period for each of the regeneration and the equilibration was 3 minutes.

After four complete cycles, the qualified sample was collected from the second port of the second chromatography column 120.

The purity of the collected qualified sample was determined by gas chromatography under the following conditions: instrument model: Agilent GC8860; chromatography column: Agilent XB-WAX 25m×320µm×0.15µm; injection volume: 1 µL. The detection conditions were as follows: inlet temperature: 280 °C; split ratio: 25:1; split flow: 30 mL/min; column temperature: initial 150 °C, rising at a rate of 2.5 °C/min to 270 °C, holding for 5 minutes; FID detector: 270 °C.

The obtained gas chromatography detection spectrum is shown in FIG. 3. FIG. 3 shows the detection spectrum of the oil after separation and purification by using the single- and dual-column alternating cycling chromatography system 10 for separation and purification according to an embodiment of the present application. As shown in FIG. 3, FIG. 3 is the detection spectrum of the collected qualified sample after preparation. After multiple cycles of transfer of the raw material, effective separation of the target sample from impurities was achieved. The qualified sample had a purity greater than 99% and a calculated yield greater than 90%.

In summary, the present application reduces the number of chromatography columns while employing the countercurrent operation of the simulated moving bed (SMB), realizing automated continuous cycling operation of the due-column chromatography. The main advantages lie in using two chromatography columns to realize the countercurrent and continuous operation functions of the simulated moving bed, enabling true continuous separation and purification of multi-component mixtures at relatively low investment costs. The system has a simplified structure with flexible operation, and a relatively high separation efficiency and yield, and can achieve automated continuous operation, saving time and labor costs, and reducing the capital investment. Moreover, the system maintenance and cleaning can be conducted easily, and the eluent consumption can be reduced significantly.

In the above embodiments, the descriptions of each embodiment have their own emphasized aspects. For details not elaborated in a certain embodiment, reference can be made to related descriptions in other embodiments.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A single- and dual-column alternating cycling chromatography system for separation and purification, comprising: a first chromatography column, a second chromatography column, a first detector, a second detector, a first controlling valve, a second controlling valve, a first multi-port valve, a second multi-port valve, a third multi-port valve, a fourth multi-port valve, a fifth multi-port valve, and a sixth multi-port valve;
wherein the first controlling valve, the first multi-port valve, the first chromatography column, the first detector, and the third multi-port valve are sequentially connected;
the second controlling valve, the second multi-port valve, the second chromatography column, the second detector, and the fourth multi-port valve are sequentially connected;
the first multi-port valve is further connected to the second controlling valve;
the second multi-port valve is further connected to the first controlling valve;
the second multi-port valve is connected to the third multi-port valve, the fifth multi-port valve, and the sixth multi-port valve, parallelly;
the fifth multi-port valve and the sixth multi-port valve are further parallelly connected to the first multi-port valve; and
the fourth multi-port valve is further connected to the first multi-port valve, the fifth multi-port valve, and the sixth multi-port valve, parallelly.

2. The single- and dual-column alternating cycling chromatography system for separation and purification according to claim 1, wherein the first controlling valve, the second controlling valve, the first multi-port valve, the second multi-port valve, the third multi-port valve, the fourth multi-port valve, the fifth multi-port valve, and the sixth multi-port valve are each independently selected from a four-port valve.

3. The single- and dual-column alternating cycling chromatography system for separation and purification according to claim 1, further comprising a first driving pump, wherein a port of the first multi-port valve and a port of the second multi-port valve are connected in parallel and then connected to the first controlling valve via the first driving pump.

4. The single- and dual-column alternating cycling chromatography system for separation and purification according to claim 1, further comprising a second driving pump, wherein a port of the first multi-port valve and a port of the second multi-port valve are connected in parallel and then connected to the second controlling valve via the second driving pump.

5. The single- and dual-column alternating cycling chromatography system for separation and purification according to claim 1, further comprising a third driving pump, wherein a port of the fourth multi-port valve, a port of the fifth multi-port valve, and a port of the sixth multi-port valve are connected in parallel and then connected to the first multi-port valve via the third driving pump.

6. The single- and dual-column alternating cycling chromatography system for separation and purification according to claim 1, further comprising a fourth driving pump connected to a port of the fifth multi-port valve and configured to pump in a diluent; and/or
further comprising a fifth driving pump connected to a port of the sixth multi-port valve and configured to pump out an overflown solvent.

7. The single- and dual-column alternating cycling chromatography system for separation and purification according to any one of claims 1 to 6, wherein the first detector comprises one or more detectors of an ultraviolet detector, an evaporative light scattering detector, and a refractive index detector; and/or
the second detector comprises one or more detectors of an ultraviolet detector, an evaporative light scattering detector, and a refractive index detector.

8. The single- and dual-column alternating cycling chromatography system for separation and purification according to claim 1, wherein the first multi-port valve at least comprises: a first port connected to the first controlling valve, a second port connected to the second controlling valve, a third port connected to the first chromatography column, and a fourth port connected to the third driving pump;
the second multi-port valve at least comprises: a first port connected to the first controlling valve, a second port connected to the second controlling valve, a third port connected to the second chromatography column, and a fourth port parallelly connected to the fifth multi-port valve and the sixth multi-port valve;
the third multi-port valve at least comprises: a first port connected to the first detector and configured to discharge a former impurity, a second port parallelly connected to the second multi-port valve and the fifth multi-port valve, a third port configured to discharge a latter impurity, and a fourth port configured to discharge a separated sample;
the fourth multi-port valve at least comprises: a first port connected to the second detector and configured to discharge a latter impurity, a second port configured to discharge a latter impurity, a third port configured to discharge a separated sample, and a second port parallelly connected to the third driving pump, the fifth multi-port valve, and the sixth multi-port valve;
the fifth multi-port valve at least comprises: a first port, a second port connected to the second multi-port valve, a third port configured to pump in a diluent, and a fourth port parallelly connected to the first multi-port valve and the fourth multi-port valve;
the sixth multi-port valve at least comprises: a first port, a second port connected to the second multi-port valve, a third port configured to discharge an overflown solvent, and a fourth port parallelly connected to the first multi-port valve and the fourth multi-port valve.

9. A single- and dual-column alternating cycling chromatography method for separation and purification using the single- and dual-column alternating cycling chromatography system according to any one of claims 1 to 8, comprising following steps:
performing a first cycle, comprising:
saturation loading a multi-component mixture (G) onto the first chromatography column;
eluting the first chromatography column to separate the multi-component mixture (G) through the first chromatography column into a former impurity (a), a former impurity and sample mixed fraction (b), a small amount of qualified sample fraction (c), a latter impurity and sample mixed fraction (d), and a latter impurity (e) in sequence;
under the eluting with a mobile phase, discharging the former impurity fraction (a) via the third multi-port valve first, transferring the former impurity and sample mixed fraction (b), the small amount of qualified sample fraction (c), and the latter impurity and sample mixed fraction (d) into the second chromatography column, wherein the former impurity and sample mixed fraction (b), the small amount of qualified sample fraction (c), and the latter impurity and sample mixed fraction (d) collectively form an internal circulating sample (f); during transferring the internal circulating sample (f), controlling the system to be in a closed-loop state without introducing an additional eluent, and pumping a diluent into the system for online dilution according to an application scenario of the sample;
switching the first controlling valve to a regenerant to discharge the latter impurity (e) from the first chromatography column; and
switching the first controlling valve to an eluent to equilibrate the first chromatography column, thereby completing the first cycle;
performing a second cycle, comprising:
transferring the internal circulating sample (f) from the second chromatography column to the first chromatography column via a port of the first chromatography column configured to receive the internal circulating sample (f); and during transferring the internal circulating sample (f), controlling the system to be in a closed-loop state without introducing an additional eluent, and pumping a diluent into the system for online dilution according to an application scenario of the sample;
switching the first controlling valve to the regenerant and activating the first driving pump to discharge the latter impurity (e) from the second chromatography column; and
switching the first controlling valve to the eluent and activating the first driving pump to equilibrate the second chromatography column, thereby completing the second cycle; and
repeating the first cycle and the second cycle until the internal circulating sample (f) meets a quality requirement.

10. The method according to claim 9, further satisfying at least one of following conditions:
(1) the former impurity (a) or the latter impurity (e) discharged from the first chromatography column or the second chromatography column is collected and stored separately;
(2) the mobile phase comprises, but is not limited to, the eluent, the regenerant, or an equilibration buffer;
(3) after repeating the first cycle and the second cycle at least once, the regenerant and/or the equilibration buffer are pumped in through the first driving pump to regenerate and/or equilibrate the first chromatography column and/or the second chromatography column.
